# EUROPEAN PATENT SPECIFICATION

(11) **EP 0 263 886 B1**
(45) Date of publication and mention of the grant of the patent: **17.02.1993**
(21) Application number: 87902716.7
(22) Date of filing: 10.04.1987
(51) Int. Cl.: G06F 15/16

(54) **INTERRUPT CONTROL METHOD IN A MULTIPROCESSOR SYSTEM**
UNTERBRECHUNGSSTEUERUNGSVERFAHREN IN EINEM MEHRPROZESSORSYSTEM
PROCEDE DE COMMANDE D'INTERRUPTION DANS UN SYSTEME MULTIPROCESSEUR

(30) Priority: 15.04.1986 JP 86921/86
(43) Date of publication of application: 20.04.1988
(73) Proprietor: FANUC LTD., Minamitsuru-gun, Yamanashi 401-05 (JP)
(72) Inventor: YONEKURA, Mikio Keio takao mansion 1103, Hachioji-shi Tokyo 193 (JP); KINOSHITA, Jiro 252, Shimotsuruma, Kanagawa 242 (JP)
(74) Representative: Brunner, Michael John
(86) International application number: PCT/JP87/00225
(87) International publication number: WO 87/06370

(56) References cited:
- GB-A- 2 110 442
- JP-A-59 136 862
- JP-A-61 595 65
- PATENT ABSTRACTS OF JAPAN, vol. 6, no. 112 (P-124)[990], 23rd June 1982; & JP-A-57 41 727 (HITACHI SEISAKUSHO K.K.) 09-03-1982
- PATENT ABSTRACTS OF JAPAN, vol. 9, no. 243 (P-392)[1966], 30th September 1985; & JP-A-60 95 678 (MITSUBISHI DENKI K.K.) 29-05-1985

## Description

The present invention relates to an interrupt control method for a multiprocessor system and, more particularly, to a method which enables each processor to recognize an interrupt without using a special interrupt control line.

As systems employing processors become more and more sophisticated and complex, systems have been developed in which a plurality of processors is used in a single system. In such a multiprocessor system, the processors are interconnected by a bus, each processor requiring a special dedicated line for interrupts.

The more the number of CPUs used, the more such special interrupt lines are needed, resulting in increased hardware and especially lowered system flexibility.

In GB-A-2 110 442 a system is disclosed in which interrupts are generated by writing data onto the data bus addressed to the particular processor which is to be interrupted, an interrupt message generated in one processor, being transmitted to another processor in the form of data on the data bus. This results in the interrupt processing not executing until the interrupt message is read by the respective CPU. In contrast to this method, not only is the system bus occupied by the bus cycle generator circuit in the interface circuit, but also, the interrupt processing requires the use of both the address bus and the data bus in order that interrupt processing can be executed immediately, without delay. In JP-A-57-041 727, although the interrupt information is fed to the address/data line of a common bus, the interrupt control line is still used so that the respective processor recognises the interrupt. JP-A-61-059 565 discloses the feature that an interrupt message is transmitted with an identification code of an input/output device which delivered the interrupt request.

It is an object of the present invention to provide an interrupt control method for a multiprocessor system, which will solve the aforesaid problems and does not use any dedicated line and provides a higher degree of flexibility.

According to the invention, the above problems can be solved by an interrupt control method for a multiprocessor system in which a plurality of processors and an interface circuit for causing interrupts are connected to a system bus having an address bus and a data bus, the method comprising the steps of: using a particular address space as an interrupt address; selecting a mask bit corresponding to the address space in each processor; storing the mask bit in a register in the processor; allowing a bus cycle generator circuit in the interface circuit to occupy the bus in response to an interrupt signal; writing a bit indicative of an interrupt cause and corresponding to the address space into the address bus; writing a data bit for selection in recognizing the interrupt into the data bus; and enabling the processor to recognize an interrupt from the address bus bit corresponding to the address space, the mask bit stored in the register and the data bit.

Thus, when an interrupt is caused, the bus cycle generator circuit in the interface writes data into the address bit corresponding to the interrupt cause. Since the address space is defined as an interrupt address, the processor recognizes an interrupt, compares the address with the mask bit stored in the processor register and recognizes the interrupt as an interrupt applied to itself. Therefore, no special hardware control line for interrupts is required and the interrupt is executed without delay.

The invention also includes an interrupt control system for a multiprocessor system, comprising: a bus for transmitting various data, the bus comprising a data bus, an address bus, and a control bus; a plurality of processor boards coupled to the bus, each of the processor boards including: a microprocessor for executing processing an interrupt; a mask bit register outputting a first interrupt address allocated to the microprocessor; an address decoder, coupled to the address bus, for decoding first and second address bit data to generate a second interrupt address; and a selector circuit, coupled to the bus, the address decoder, the mask bit register and the microprocessor, for comparing the first interrupt address with the second interrupt address to detect whether an interrupt bit data has been output to the data bus; an interface circuit, coupled to the bus and to each of the processor boards, for receiving an external interrupt signal, the interface circuit including interrupt control circuits, the number of interrupt control circuits corresponding to the number of processor boards, the interrupt control circuits obtaining the right to use and occupy the bus upon receipt of the external interrupt signal and outputting to the data bus interrupt bit data indicating that the cause of the interrupt is an external interrupt, and at the same time, outputting to the address bus the address bit data in accordance with the external interrupt signal.

One example of a method and system according to the present invention will now be described with reference to the accompanying drawings, in which:-
FIG. 1 is a block diagram of the example; and
FIG. 2 is a detailed block diagram of an interrupt control circuit.

An interface circuit 10 for receiving an external interrupt signal has control circuits 11, 12, 13 for receiving respective interrupt signals IS1, IS2, IS3. A processor board 20 has therein a CPU1 21, a selector circuit (SC) 22, a decoder circuit 23, and a mask bit register 24. The decoder circuit 23 decodes an address bus input, compares it with the data stored in the mask bit register 24, and recognizes whether there is an interrupt applied to the processor 20.

Processor boards 30, 40 are identical in structure to the processor board 20, and have respective CPU2 31, CPU3 41, selector circuits 32, 42, decoder circuits 33, 43, and mask bit registers 34, 44.

The interface circuit 10 and the processors 20, 30, 40 are interconnected by a bus 4 comprising address buses, data buses, and commands such as READ, WRITE.

Operation will now be described below. Addresses Addr1, Addr2, Addr3 in the entire address space are allotted to an interrupt. When an external interrupt signal Is2 is applied to the interrupt control circuit (IC2) 12, the interrupt control circuit 12 occupies the buses, and writes bit data Addr 2 corresponding to the interrupt signal IS2 into the address bus, and simultaneously writes "1" into a D0 bit in the data bus. The processor board 20 reads in the address bus, decodes it, and compares this bit data with the data in the mask bit register 24. The processor board 20 then recognizes the interrupt signal applied thereto by confirming that the D0 bit of the data bus is "1", and the CPU1 21 starts executing an interrupt program. The data stored in the mask bit register 24 is:
0, 1, 0
which correspond to three addresses Addr1, Addr2, Addr3.

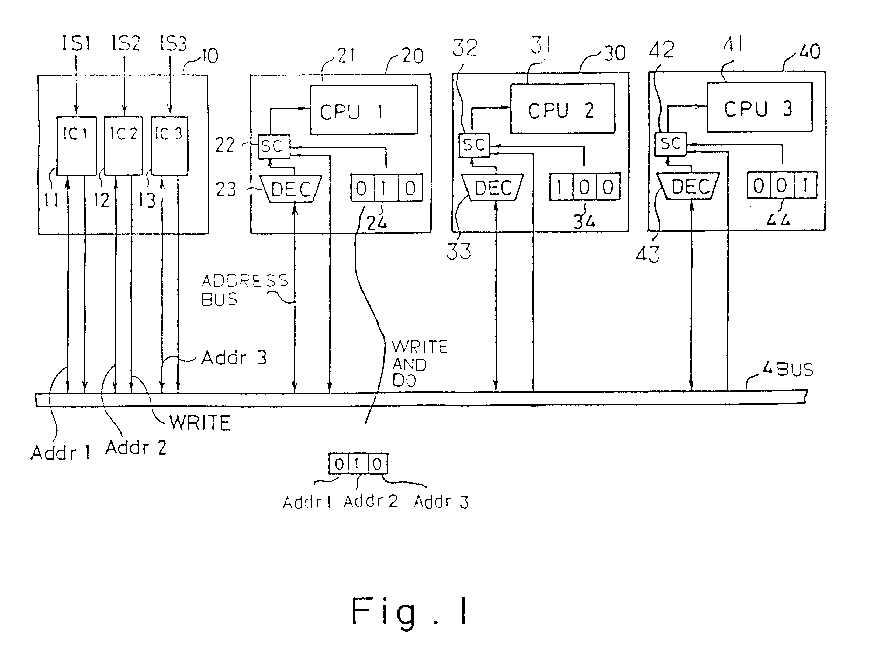

The data of the mask bit register 24 represents which interrupt signal is directed to which processor, and can be modified in a program. In FIG. 1, the data items of the mask bit registers 24, 34, 44 are determined such that the interrupt signal IS1 causes an interrupt with respect to the processor 30, the interrupt signal IS2 causes an interrupt with respect to the processor 20, and the interrupt signal IS3 causes an interrupt with respect to the processor 40.

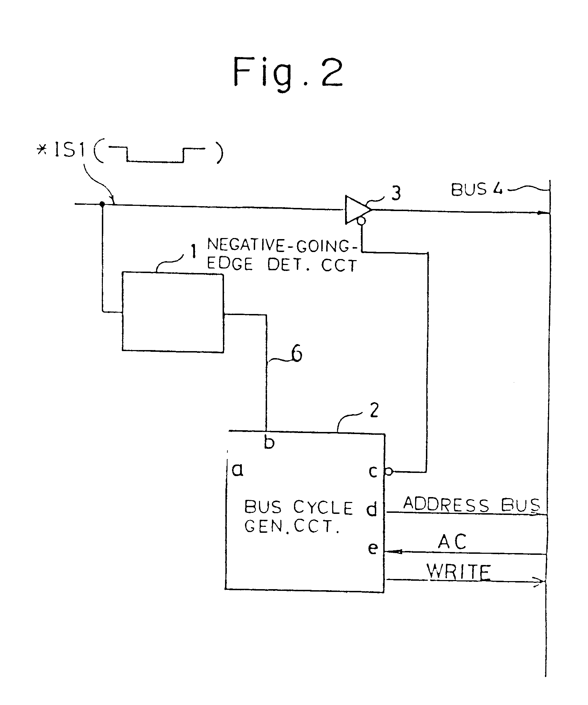

The interrupt control circuit 11 will hereinafter be described in detail. FIG. 2 shows in detailed block form the interrupt control circuit (IC1) 11. The interrupt control circuit includes a negative-going-edge detector circuit 1 for detecting a negative-going edge of an interrupt signal, a bus cycle generator circuit 2 for controlling the bus in response to an interrupt, and request use of the bus 4 in response to a detected signal 6 from the negative-going-edge detector circuit 1. When the request is accepted, a signal AC (Aknowledge) at a terminal e of the bus cycle generator circuit 2 becomes active, allowing the bus cycle generator circuit 2 to occupy the bus 4. When the bus 4 is occupied by the bus cycle generator circuit 2, the bus cycle generator circuit 2 issues an address which is predetermined with respect to the interrupt signal to the address bus. In the illustrated embodiment, a 24-bit address Addr1 is issued for the interrupt signal IS1. At the same time, the bus cycle generator circuit 2 issues a signal via a terminal c to a bus driver 3 which in turn writes "0" into the D0 bit of the data bus. The interrupt signal is expressed here as *IS1 since it is represented as a reverse signal. When there is an interrupt, the interrupt signal becomes "0". Therefore, "0" is written into the D0 bit of the data bus.

The address has been described as being of 24 bits. However, the present invention is also applicable to any desired address space. Though the D0 bit has been used as the data bit, it can be determined as desired which bit is to be employed. Moreover, it is possible to expand the interrupt signals to many interrupt signals by combining addresses and data buses.

With the present invention, as described above, no special hardware line is used for interrupts, but an address space is allotted to interrupts. Therefore, the number of interrupt signals can be increased as desired without requiring special hardware and by combining addresses and data buses.

A processor allotted to an interrupt can be varied as desired by rewriting an interrupt mask bit register with a program.

## Claims

1. An interrupt control method for a multiprocessor system in which a plurality of processors (20,30,40) and an interface circuit (10) for causing interrupts are connected to a system bus (4) having an address bus and a data bus, the method comprising the steps of:
using a particular address space (Addr1,Addr2,Addr3) as an interrupt address;
selecting a mask bit corresponding to said address space in each processor;
storing said mask bit in a register (24,34,44) in said processor;
allowing a bus cycle generator circuit (2) in said interface circuit to occupy the bus in response to an interrupt signal (IS1,IS2,IS3);
writing a bit indicative of an interrupt cause and corresponding to said address space into the address bus;
writing a data bit for selection in recognizing the interrupt into the data bus; and
enabling said processor to recognize an interrupt from the address bus bit corresponding to said address space, the mask bit stored in said register and said data bit.

2. A method according to claim 1, wherein said register for storing the interrupt mask bit is rewritten by a program.

3. A method according to claim 1 or claim 2, wherein said bus cycle generator circuit occupies said bus in response to a negative-going edge of an interrupt signal (IS1,IS2,IS3).

4. An interrupt control system for a multiprocessor system, comprising:
a bus (4) for transmitting various data, said bus comprising a data bus, an address bus, and a control bus;
a plurality of processor boards (20,30,40) coupled to said bus, each of said processor boards including:
a microprocessor (21,31,41) for executing processing an interrupt;
a mask bit register (24,34,44) outputting a first interrupt address allocated to said microprocessor;
an address decoder (23,33,43), coupled to said address bus, for decoding first and second address bit data to generate a second interrupt address; and
a selector circuit (22,32,42), coupled to said bus, said address decoder, said mask bit register and said microprocessor, for comparing said first interrupt address with said second interrupt address to detect whether an interrupt bit data has been output to said data bus;
an interface circuit (10), coupled to said bus and to each of said processor boards, for receiving an external interrupt signal, said interface circuit including interrupt control circuits (IC1,IC2,IC3), the number of interrupt control circuits corresponding to the number of processor boards, said interrupt control circuits obtaining the right to use and occupy said bus upon receipt of said external interrupt signal and outputting to said data bus interrupt bit data indicating that the cause of the interrupt is an external interrupt, and at the same time, outputting to said address bus the address bit data in accordance with said external interrupt signal.

5. A system according to claim 4, wherein the interrupt control circuits include a bus cycle generator circuit for occupying the bus in response to receipt of the negative-going edge of an interrupt signal (IS1,IS2,IS3).

## Patentansprüche

1. Unterbrechungssteuerverfahren für ein Mehrprozessorensystem, bei dem mehrere Prozessoren (20,30,40) und eine Schnittstelle (10) zum Auslösen von Unterbrechungen an einen Systembus (4) mit einem Adressenbus und einen Datenbus angeschlossen sind und das Verfahren folgende Schritte aufweist:
Man benutzt einen besonderen Adressenraum (Addr1, Addr2, Addr3) als Unterbrecheradresse,
wählt ein dem Adressenraum in jedem Prozessor entsprechendes Maskenbit aus,
speichert das Maskenbit in einem Speicher (24,34,44) des Prozessors,
läßt einen Bus-Zyklus-Generator (2) in der Schnittstelle den Bus bei Auftreten eines Unterbrechersignals (Is1, Is2, Is3) besetzen,
man schreibt ein Bit für die Unterbrechung und entsprechend dem Adressenraum in den Adressenbus,
schreibt ein Datenbit zur Auswahl beim Erkennen der Unterbrechung in den Datenbus, und
befähigt damit den Prozessor, eine Unterbrechung aufgrund des Adressenbus-Bits entsprechend dem Adressenraum, dem im Speicher abgespeicherten Maskenbit und Datenbit zu erkennen.

2. Verfahren nach Anspruch 1,
bei dem der Speicher zum Speichern des Unterbrecher-Maskenbits mit einem Programm geladen ist.

3. Verfahren nach Anspruch 1 oder 2,
bei dem der Bus-Zyklus-Generator den Bus beim Auftreten einer ins Negative gehenden Flanke eines Unterbrechersignals (Is1, Is2, Is3) belegt.

4. Unterbrechungssteuersystem für ein Mehrprozessorensystem, das aufweist:
Einen Bus (4) zum Übertragen verschiedener Daten, mit einem Datenbus, einem Adressenbus und einem Steuerbus,
mehreren an den Bus angeschlossenen Prozessorkarten (20, 30, 40), von denen jede aufweist:
Einen Mikroprozessor (21,31,41) zum Ausführen einer Unterbrechung;
einen Maskenbit-Speicher (24,34,44) zur Ausgabe einer ersten dem Mikroprozessor zugeordneten Unterbrecheradresse;
eine an den Adressenbus angeschlossene Decodierschaltung (23,33,43) zum Decodieren erster und zweiter Adressenbit-Daten, um eine zweite Unterbrecheradresse zu erzeugen und eine an den Bus, die Adressen-Decodierschaltung, den Maskenbit-Speicher und den Mikroprozessor angeschlossene Auswahlschaltung (22,32,42) zum Vergleichen der ersten Unterbrecheradresse mit der zweiten Unterbrecheradresse, um festzustellen, ob auf dem Datenbus Unterbrecher-Bit-Daten anstehen,
eine an den Bus und an jede Prozessorkarte angeschlossene Schnittstelle (10) zum Empfang externer Unterbrechersignale, wobei die Schnittstelle Unterbrechersteuerschaltungen (Ic1, Ic2, Ic3) aufweist, deren Anzahl gleich der Anzahl der Prozessorkarten ist, wobei die Unterbrechersteuerschaltungen berechtigt sind, bei Empfang eines externen Unterbrechersignals den Bus zu benutzen und zu belegen und dem Datenbus Unterbrecher-Bit-Daten zuzuführen, die anzeigen, daß der Anlaß für eine Unterbrechung eine externe Unterbrechung ist und gleichzeitig auf den Adressenbus die Adressen-Bit-Daten entsprechend dem externen Unterbrechersignal zuzuführen.

5. System nach Anspruch 4,
bei dem die Unterbrechersteuerschaltungen einen Bus-Zyklus-Generator aufweisen, um den Bus beim Auftreten einer negativ gehenden Flanke eines Unterbrechersignals (Is1, Is2, Is3) zu belegen.

## Revendications

1. Méthode de contrôle rupteur de système multiprocesseur dont une série de processeurs (20,30,40) et un circuit d'interface (10) provoquant les interruptions sont reliés à un bus de système (4) ayant un bus d'adresse et un bus de données, la méthode comportant les phases fonctionnelles suivantes:
exploiter un espace donné d'adresse (Addr1,Addr2, Addr3) comme adresse d'interruption;
sélectionner un bit de masque correspondant audit espace donné d'adresse dans chaque processeur;
mettre en mémoire ledit bit de masque dans un registre (24,34,44) correspondant à l'espace donné d'adresse dudit processeur;
admettre l'occupation du bus par un circuit générateur de cycle de bus (2) dudit circuit d'interface en réponse à un signal d'interruption (IS1,IS2,IS3);
écrire au bus d'adresse un bit indicatif de cause d'interruption et correspondant audit espace d'adresse;
écrire au bus de données un bit de données choisi suivant le repérage de l'interruption; et
valider ledit processeur pour repérer une interruption à partir du bit de bus d'adresse correspondant audit espace d'adresse, au bit de masque en mémoire dudit registre et audit bit de données.

2. Méthode selon la revendication 1, dont un programme reprend l'écriture dudit registre de mémoire du bit de masque d'interruption.

3. Méthode selon la revendication 1 ou la revendication 2, dont le circuit générateur de cycle de bus occupe ledit bus en réponse à un bord de tendance négative de signal d'interruption (IS1,IS2,IS3).

4. Système d'interruption de commande de système multiprocesseur, comportant:
un bus (4) de transmission de données quelconques, ledit bus comportant un bus de données, un bus d'adresse et un bus de commande;
une série de plaquettes de processeur 20,30,40) accouplée à chaque bus, chacune desdites plaquettes de processeur comportant:
un microprocesseur (21,31,41) pour exécuter une interruption de traitement;
un registre de bit de masque (24,34,44) assurant une première sortie affectée à chaque microprocesseur;
un décodeur d'adresse accouplé audit bus d'adresse, pour décoder les données de premier et deuxième bit d'adresse pour générer une deuxième adresse d'interruption; et
un circuit sélecteur (22,32,42) accouplé audit bus, audit décodeur d'adresse, audit registre de bit de masque et audit microprocesseur, pour comparer ladite première d'interruption avec ladite deuxième adresse d'interruption de façon à repérer si une données de bit d'interruption a été sortie vers ledit bus de données;
un circuit d'interface (10, accouplé audit bus et à chacune desdits plaquettes de processeur, pour recevoir un signal extérieur d'interruption, le circuit d'interface comportant des circuits de commande d'interruption (IC1,IC2,IC3), le nombre de circuits de commande d'interruption correspondant au nombre de plaquettes de processeur, lesdits circuits de commande d'interruption obtenant le droit d'exploiter et d'occuper ledit bus suivant réception dudit signal extérieur d'interruption et apportant une sortie audit bus de données des données de bit d'interruption indiquant que l'interruption est de cause extérieure, et en même temps, apportant en sortie audit bus d'adresse les données de bit d'adresse en conformité avec ledit signal extérieur d'interruption.

5. Système selon la revendication 4, dont les circuits de commande d'interruption comporte un circuit générateur de cycle de bus pour occuper le bus en réponse à la réception du bord à tendance négative d'un signal d'interruption (IS1,IS2,IS3).
